## Europäisches Patentamt
## European Patent Office
## Office européen des brevets

(19)

(11) Numéro de publication : **0 042 841**
**B1**

(12)

# FASCICULE DE BREVET EUROPÉEN

(45) Date de publication du fascicule du brevet :
**07.12.83**

(51) Int. Cl.³ : **F 02 B 19/08**

(21) Numéro de dépôt : **80902386.4**

(22) Date de dépôt : **18.12.80**

(86) Numéro de dépôt international :
**PCT/CH 80/00157**

(87) Numéro de publication internationale :
**WO WO/81020 (23.07.81 Gazettee 81/17)**

(54) **MOTEUR A COMBUSTION INTERNE AVEC CHAMBRE DE TURBULENCE.**

(30) Priorité : **03.01.80 CH 1/80**

(43) Date de publication de la demande :
**06.01.82 Bulletin 82/01**

(45) Mention de la délivrance du brevet :
**07.12.83 Bulletin 83/49**

(84) Etats contractants désignés :
**FR**

(56) Documents cités :
**DE-A- 2 542 942**
**DE-A- 2 624 211**
**DE-A- 2 715 943**
**DE-A- 2 806 358**
**DE-A- 2 831 442**
**DE-A- 3 003 479**
**DE-B- 1 240 699**
**FR-A- 2 420 033**
**US-A- 2 882 873**
**US-A- 3 304 922**
**US-A- 4 174 679**
**US-A- 4 176 649**

(73) Titulaire : **Müller, Rudolf**
**Chemin du Ciclet**
**CH-1860 Aigle (CH)**

(72) Inventeur : **Müller, Rudolf**
**Chemin du Ciclet**
**CH-1860 Aigle (CH)**

(74) Mandataire : **Nithardt, Roland**
**CABINET ROLAND NITHARDT 41, rue de Neuchâtel**
**CH-1400 Yverdon (CH)**

EP 0 042 841 B1

Jouve, 18, rue St-Denis, 75001 Paris, France

Moteur à Combustion Interne avec Chambre de Turbulence

La présente invention concerne un moteur à combustion interne comportant au moins une chambre de combustion, un piston correspondant, une chambre de turbulence de forme sphérique ou ovoïde ménagée dans la culasse à l'extrémité supérieure de la chambre de combustion et un dispositif d'allumage des gaz comprimés, monté dans la paroi de la chambre de turbulence, la chambre de turbulence étant reliée à la chambre de combustion par au moins un canal ménagé dans la culasse débouchant tangentiellement à la base de la chambre de turbulence, de manière à provoquer un flux préférentiel du mélange combustible pénétrant dans la chambre de turbulence et à déclencher une turbulence cyclonique ordonnée de ce mélange.

On connaît des moteurs du type Otto comportant une chambre de turbulence ménagée dans la culasse au-dessus de la chambre de combustion. A titre d'exemple, le DE-A-2 624 211, publiée le 15.12.1977, décrit un moteur comprenant une chambre de turbulence sensiblement en forme d'ellipsoïde de révolution, communiquant avec la chambre de combustion par un conduit tubulaire relativement étroit.

La demande de brevet français publiée sous le n° 2 420 033 décrit un moteur du même type comportant un évidement communiquant par un canal coaxial avec la partie supérieure de la chambre de combustion.

Le DE-A-2 542 942, publiée avant le 28.8.1976, décrit un moteur comportant une chambre de turbulence ménagée dans la culasse entre la chambre de combustion et la soupape d'échappement.

Un canal tangentiel relativement large assure le raccordement de la chambre de compression à la chambre de turbulence. La soupape d'échappement constitue le « fond » de cette chambre, dont l'ouverture du côté de la chambre de compression a sensiblement le même diamètre que la soupape. D'une part, la construction de la chambre de turbulence ne peut s'appliquer qu'à des moteurs conçus à cet effet et il n'est guère possible, par simple usinage de la culasse d'un moteur existant, d'aménager une chambre de turbulence telle que décrite, ceci en raison de la position de la soupape d'échappement. En outre, le canal d'entrée n'est pas conçu pour provoquer une accélération des gaz à l'entrée de la chambre de turbulence, de sorte que l'effet cyclonique n'est pas obtenu de la même intensité.

Tous ces dispositifs ont pour but de favoriser une meilleure homogénéité du mélange combustible contenant un exédent d'air. Or, l'on sait que l'accroissement du taux de compression et l'excédent d'air dans le mélange combustible engendrent un meilleur rendement du moteur et permettent une réduction non négligeable de la teneur en composants toxiques dans les gaz d'échappement. Ceci est essentiellement dû à une meilleure combustion et entraîne de façon connue en soi une réduction non négligeable de la consommation en carburant du moteur.

La présente invention propose un perfectionnement apporté à ce type de moteur, permettant d'améliorer l'homogénéité du mélange, autorisant un fonctionnement à taux de compression très élevé et réduisant encore davantage la consommation de carburant.

Dans ce but, la présente invention est caractérisée en ce que le moteur comporte deux canaux tangentiels en communication avec l'entrée de la chambre de turbulence, chacun de ces canaux ayant son origine à proximité immédiate d'une soupape d'admission, respectivement d'échappement, la largeur de ces canaux étant, à l'origine, sensiblement égale au diamètre de la soupape correspondante, et se rétrécissant de façon continue en direction de la chambre de turbulence, la profondeur de ces canaux étant sensiblement en progression inverse par rapport à la largeur.

Selon une forme de réalisation préférée, un moteur à combustion interne à quatre temps comporte deux canaux tangentiels en communication avec l'entrée de la chambre de turbulence, chacun de ces canaux ayant son origine à proximité immédiate de la soupape d'admission, respectivement la soupape d'échappement, et se rétrécissant pour déboucher tangentiellement le long de la paroi de la chambre de turbulence à proximité immédiate de l'orifice d'entrée de cette chambre. La profondeur des canaux est sensiblement en progression inverse par rapport à la largeur. Les canaux ont de préférence une profondeur plus importante le long de leur bord concave que le long de leur bord convexe. Ces différentes dispositions permettent d'obtenir d'une part un flux de mélange accéléré, d'autre part un flux débouchant tangentiellement à l'intérieur de la chambre de turbulence et enfin un flux légèrement incliné en direction du fond de la chambre. Cet ensemble de mesures a pour effet d'engendrer une circulation hélicoïdale à l'intérieur de la chambre de turbulence.

Selon une forme de réalisation particulière de la présente invention, le dispositif d'allumage est monté sur une des parois de la chambre de turbulence et un dispositif d'injection directe du carburant est monté à l'extrémité fermée de la chambre de turbulence, sensiblement dans le prolongement de l'axe longitudinal de cette chambre. Cette disposition particulière permet d'obtenir une stratification du mélange, c'est-à-dire une concentration de la partie la plus riche du carburant au sommet de la chambre de turbulence. Ce moyen permet d'accroître considérablement le taux de compression du moteur et par conséquent d'atteindre un rendement du moteur fortement amélioré.

La présente invention sera mieux comprise en référence à la description d'exemples de réalisation et du dessin annexé dans lequel :

la figure 1 représente une vue partielle de dessous d'une culasse d'un moteur à quatre temps selon l'invention,

la figure 2 représente une vue en coupe selon la ligne A-A de la figure 1,

les figures 3A et 3B représentent une vue en coupe respectivement selon les lignes B-B et C-C de la figure 1,

la figure 4 représente une vue partielle en coupe d'une autre forme de réalisation d'un moteur à quatre temps selon l'invention,

la figure 5 représente une vue partielle en coupe d'une variante d'un moteur à quatre temps selon l'invention, comportant un dispositif d'injection directe du carburant,

la figure 6 représente une vue partielle en coupe longitudinale d'un moteur à deux temps selon l'invention, et

la figure 7 représente une vue de dessous de la culasse du moteur à deux temps de la figure 6.

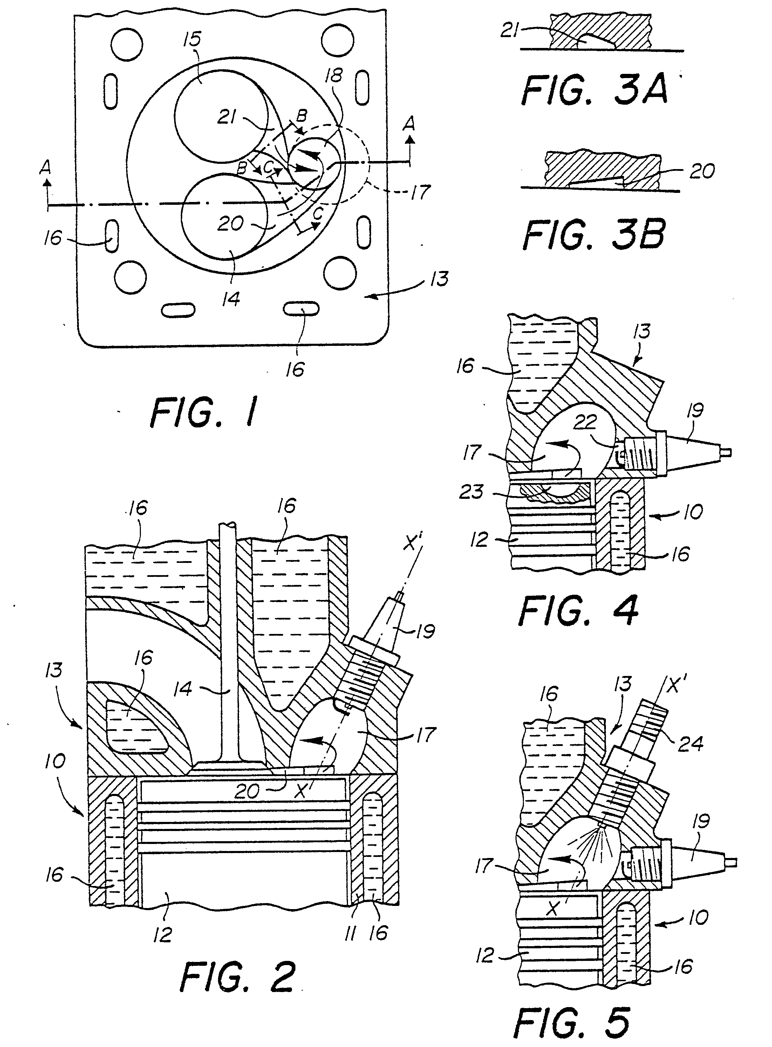

En référence aux figures 1 à 3, le bloc moteur à quatre temps 10, représenté partiellement en coupe, comporte quatre chambres de combustion 11 dans lesquelles sont respectivement montés quatre pistons 12. Une culasse 13 surmonte le bloc moteur 10 et porte quatre soupapes d'admission 14, quatre soupapes d'échappement 15, ainsi que le mécanisme de commande de ces soupapes (non représenté). De façon connue en soi, des canaux de refroidissement 16 sont ménagés dans le bloc 10 et la culasse 13 pour assurer le refroidissement du moteur en cours de fonctionnement. Une chambre de turbulence 17 de forme ovoïde est ménagée dans la culasse et débouche à l'extrémité supérieure de la chambre de combustion par un orifice 18 sensiblement circulaire. Une bougie d'allumage 19 est montée à l'extrémité supérieure de la chambre de turbulence 17 dans l'axe XX' de cette dernière.

Deux canaux 20 et 21 sont ménagés à la base de la culasse 13, respectivement entre le siège de la soupape d'admission 14 et celui de la soupape d'échappement 15. Ces deux canaux débouchent sensiblement tangentiellement dans l'orifice 18 de la chambre de turbulence 17. Ces deux canaux ont une largeur décroissant à partir de leur origine (à proximité des soupapes) jusqu'à leur extrémité (au voisinage de l'orifice 18). Ceci permet d'obtenir un effet de tuyère, c'est-à-dire une accélération du flux de gaz au moment de leur pénétration dans la chambre de turbulence. La profondeur de ces canaux varie sensiblement à l'inverse de la largeur, dans le but de mieux guider et canaliser le flux des gaz pour leur donner un mouvement accéléré hélicoïdal à l'intérieur de la chambre de turbulence. Enfin, comme le montrent plus particulièrement les figures 3A et 3B, les canaux ont une profondeur qui est supérieure sur leur côté concave à leur profondeur côté convexe. Ceci permet également de mieux guider le courant de gaz et d'obtenir à l'entrée de la chambre de turbulence 17 un courant très fortement accéléré et pratiquement tangent aux parois de cette chambre.

Dans un moteur à quatre temps, on a constaté qu'il est avantageux, mais non indispensable, d'équiper chaque cylindre de canaux 20 et 21. On pourrait envisager de réaliser un moteur ne comportant que le canal 20 pour chaque cylindre du moteur.

Dans l'exemple décrit en référence à la figure 1, la bougie d'allumage est disposée selon l'axe XX' de la chambre de turbulence, à l'extrémité supérieure de celle-ci, ce qui permet d'obtenir un allumage progressif de la masse des gaz comprimés, et ce qui empêche la propagation de la chaleur vers la masse de mélange combustible avant que celle-ci ne soit comprimée au maximum. En d'autres termes, on retarde considérablement ou l'on supprime complètement l'autoallumage ce qui permet d'accroître le rendement du moteur.

Dans l'exemple illustré par la figure 4, la bougie d'allumage 19 est logée dans un alésage 22, débouchant le long de la paroi latérale de la chambre de turbulence 17. En fait, le point d'allumage est disposé en retrait par rapport à la paroi de la chambre de turbulence. On a constaté que cette précaution était particulièrement utile en raison de la forte turbulence cyclonique à l'intérieur de la chambre de turbulence, qui est suffisamment forte pour souffler l'étincelle apparaissant entre les électrodes de la bougie d'allumage.

Selon certaines théories, le cyclone engendré à l'intérieur de la chambre de turbulence, provoque une projection par centrifugation des particules de carburant en direction des parois de la chambre de turbulence. Ceci a pour effet de provoquer la présence d'un mélange enrichi dans la zone de la chambre voisine des parois, d'où l'intérêt de disposer la bougie d'allumage latéralement par rapport à la chambre de turbulence.

En outre, une cavité 23 est ménagée à l'extrémité supérieure du piston 12, dans le but de compléter la forme ovoïde de la chambre de turbulence 17, coupée à sa base.

Le dispositif de la figure 5 diffère de celui de la figure 4 en ce qu'il comporte un dispositif d'injection directe du carburant 24 monté à l'extrémité supérieure de la chambre de turbulence 17 selon l'axe XX' de cette dernière. Cette réalisation permet d'obtenir une stratification du mélange, la concentration de la partie la plus riche se trouvant dans la zone supérieure de la chambre de turbulence 17. Ce dispositif permet un allumage progressif du mélange combustible à partir de la zone la plus riche en direction de la zone la plus pauvre, assurant une excellente propagation de la flamme de combustion et permettant de reculer considérablement les limites habituelles de l'auto-allumage.

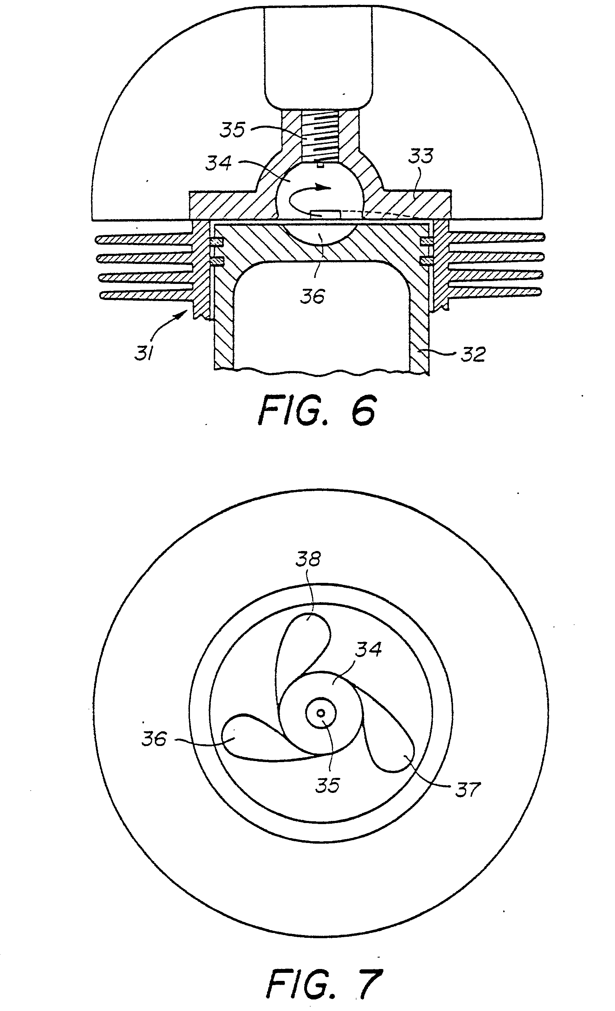

En référence aux figures 6 et 7, le moteur deux temps partiellement représenté comporte un cylindre 31 contenant un piston 32, une culasse 33 équipée d'une chambre de turbulence 34, qui est par exemple de forme sphérique, et d'un dispositif d'allumage 35 débouchant au sommet de la chambre de turbulence 34. Dans ce cas, le piston 32 comporte un évidement 36 disposé en son centre et dimensionné de telle manière que la chambre de turbulence 34 et l'évidement 36 se complètent pour former une sphère creuse lorsque le piston 32 se trouve dans sa position la plus haute. Dans cet exemple, trois canaux 36, 37 et 38, disposés symétriquement autour de la chambre de turbulence 34 sont ménagés à la base de la culasse pour permettre la pénétration d'un flux préférentiel tangentiel des gaz à l'intérieur de la chambre de turbulence. Comme précédemment, les canaux ont une largeur qui diminue en même temps qu'augmente leur profondeur au voisinage de l'orifice de la chambre de turbulence 34. De même la profondeur des canaux est supérieure du côté concave à celle mesurée du côté convexe.

Le moteur de la présente invention permet de résoudre le problème du cliquetis dans les moteurs du type Otto à taux de compression élevé. La combustion s'effectue en deux phases. La première phase se développe comme pour les moteurs Otto, à une vitesse de l'ordre de 20 à 30 m/s. Cette première phase se limite à la chambre de turbulence en raison de la pénétration du mélange, ceci jusqu'à la création d'une surpression dans cette chambre. Pendant l'intervalle de temps correspondant, la masse principale de mélange continue à être comprimée, sans que la chaleur rayonnée par le début de la combustion dans la chambre de turbulence ne puisse atteindre cette masse de mélange comprimée. Lorsque le piston s'approche de son point mort haut, la section des canaux d'entrée dans la chambre de turbulence se rétrécit. A ce moment, la combustion qui se propage à travers la chambre de turbulence développe une surpression croissant très rapidement, qui se décharge principalement par les canaux rétrécis faisant communiquer la chambre de turbulence avec la chambre de combustion. La vitesse des gaz atteint alors approximativement 100 m/s. De la sorte, une masse de gaz enflammés est éjectée à grande vitesse hors de la chambre de turbulence, pour se propager parmi la masse fortement comprimée se trouvant au-dessus du piston.

Par la pénétration forcée du front de gaz enflammés, il se forme une forte turbulence dans le mélange non enflammé restant, ce qui empêche une combustion détonante de ce mélange. Le front de gaz enflammés atteint en un temps très court des vitesses extrêmement élevées. Dès que le piston est chassé vers le bas, l'ouverture de la chambre de turbulence s'agrandit, de sorte que l'évacuation des gaz et leur expansion se font normalement sans perte de charge.

Le moteur selon l'invention s'inscrit tout à fait dans le cadre des préoccupations actuelles en matière d'économie d'énergie et de réglementation en ce qui concerne le taux des composants toxiques dans les gaz d'échappement des véhicules automobiles.

## Revendications

1. Moteur à combustion interne comportant au moins une chambre de combustion, un piston correspondant, une chambre de turbulence de forme sphérique ou ovoïde ménagée dans la culasse à l'extrémité supérieure de la chambre de combustion et un dispositif d'allumage des gaz comprimés, monté dans la paroi de la chambre de turbulence, la chambre de turbulence étant reliée à la chambre de combustion par au moins un canal ménagé dans la culasse débouchant tangentiellement à la base de la chambre de turbulence, de manière à provoquer un flux préférentiel du mélange combustible pénétrant dans la chambre de turbulence et à déclencher une turbulence cyclonique ordonnée de ce mélange, caractérisé en ce qu'il comporte deux canaux tangentiels en communication avec l'entrée de la chambre de turbulence, chacun de ces canaux ayant son origine à proximité immédiate d'une soupape d'admission, respectivement d'échappement, la largeur de ces canaux étant, à l'origine, sensiblement égale au diamètre de la soupape correspondante, et se rétrécissant de façon continue en direction de la chambre de turbulence, la profondeur de ces canaux étant sensiblement en progression inverse par rapport à la largeur.

2. Moteur selon la revendication 1, caractérisé en ce que les canaux ont une profondeur plus importante le long de leur bord concave que le long de leur bord convexe.

3. Moteur selon la revendication 1, caractérisé en ce que le dispositif d'allumage est disposé à l'extrémité fermée de la chambre de turbulence, sensiblement dans le prolongement de l'axe longitudinal de cette chambre.

4. Moteur selon la revendication 1, caractérisé en ce que le dispositif d'allumage est disposé le long d'une paroi latérale de la chambre de turbulence.

5. Moteur selon la revendication 4, caractérisé en ce qu'il comporte en outre un dispositif d'injection de carburant monté à l'extrémité fermée de la chambre de turbulence, sensiblement dans le prolongement de l'axe longitudinal de cette chambre.

6. Moteur à deux temps selon la revendication 1, caractérisé en ce que l'axe de symétrie de la chambre de turbulence est disposé sur l'axe commun du cylindre de combustion et du dispositif d'allumage, et en ce que les canaux de communication de la chambre de combustion avec la chambre de turbulence sont au nombre de trois, disposés symétriquement et tangentiellement autour de l'ouverture centrale de la chambre de turbulence.

## Claims

1. An internal combustion motor comprising at least one combustion chamber, a corresponding piston, a turbulence chamber of a spherical or ovoid shape provided in the cylinder head at the superior end of the combustion chamber and a compressed gas ignition device, said turbulence chamber being connected to combustion chamber by at least one channel provided in the cylinder head opening at a tangent at a base portion of the turbulence chamber in a manner providing a better flow of a combustible mixture penetrating in the turbulence chamber and realising an ordinate cyclonic turbulence of said combustible mixture characterized in that it comprises two tangential channels communicating with the entrance of the turbulence chamber, each channel originating immediately next to an inlet valve, respectively exhaust valve, the width of these channels being, originally, appreciably equal to the diameter of the corresponding valve and narrowing down continuously in the direction of the turbulence chamber and each channel having a depth which is an inverse progression with respect to the width.

2. Motor according to claim 1, characterized in that the channels are deeper along their concave edge than along their convex edge.

3. Motor according to claim 1, characterized in that the ignition device is disposed at the closed end of the turbulence chamber located substantially at the extension of the longitudinal axis of said chamber.

4. Motor according to claim 1, characterized in that the ignition device is disposed along a lateral wall of said turbulence chamber.

5. Motor according to claim 4, characterized in that it comprises moreover a fuel injection device mounted at the closed end of the turbulence chamber, substantially along an extension of the longitudinal axis of this chamber.

6. Two-stroke motor according to claim 1, characterized in that the symmetry axis of the turbulence chamber is disposed along the axis common to the combustion cylinder and the ignition device and having three channels communicate between the combustion chamber and the turbulence chamber, each channel being located symmetrically and at a tangent about the central opening of the turbulence chamber.


**Ansprüche**


1. Hubkolbenbrennkraftmaschine mit mindestens einem Brennraum, einem entsprechenden Kolben, einer Wirbelkammer kugeliger oder eiförmiger Form im Zylinderkopf am oberen Ende des Brennraums und einer Zündvorrichtung für die verdichteten Gase, welche in die Wand der Wirbelkammer eingebaut ist, dabei die Wirbelkammer mit dem Brennraum über mindestens einen Kanal in Verbindung steht, der in den Zylinderkopf eingearbeitet ist und tangential unten in die Wirbelkammer einmündet, derart, dass ein bevorzugter Strom des Kraftstoffgemischs, das in die Wirbelkammer eintritt, hervorgerufen wird und dass ein geordneter Zyklonwirbel dieses Gemischs ausgelöst wird, dadurch gekennzeichnet, dass sie zwei tangentiale Kanäle aufweist, die mit dem Eintritt in die Wirbelkammer in Verbindung stehen, wobei jeder dieser Kanäle seinen Ursprung in unmittelbarer Nähe eines Einlass- bzw. Auslassventils hat und wobei die breite dieser Kanäle am Ursprung ziemlich gleich dem Durchmesser des entsprechenden Ventils ist und sich kontinuierlich in Richtung auf die Wirbelkammer hin verjüngt, wohingegen die Tiefe dieser Kanäle ziemlich umgekehrt proportional zu ihrer Breite sich verhält.

2. Brennkraftmaschine gemäss Anspruch 1, dadurch gekennzeichnet, dass die Kanäle längs ihres Konkaven Randes eine grössere Tiefe aufweisen als längs ihres konvexen Randes.

3. Brennkraftmaschine gemäss Anspruch 1, dadurch gekennzeichnet, dass die Zündvorrichtung am geschlossenen Ende der Wirbelkammer ziemlich in der Verlängerung der Längsachse dieser Kammer angeordnet ist.

4. Brennkraftmaschine gemäss Anspruch 1, dadurch gekennzeichnet, dass die Zündvorrichtung längs einer Seitenwand der Wirbelkammer angeordnet ist.

5. Brennkraftmaschine gemäss Anspruch 4, dadurch gekennzeichnet, dass sie zudem eine am geschlossenen Ende der Wirbelkammer vorgesehene Kraftstoffeinspritzeinrichtung aufweist, die ziemlich in der Verlängerung der Längsachse dieser Kammer angeordnet ist.

6. 2-Takt-Brennkraftmaschine gemäss Anspruch 1, dadurch gekennzeichnet, dass die Symmetrieachse der Brennkammer auf der gemeinsamen Achse des Zylinders und der Zündvorrichtung liegt und dass die Verbindungskanäle zwischen Brennraum und Wirbelkammer sich auf mindestens drei belaufen, wobei letztere symmetrisch und tangential um die Mittenöffnung der Wirbelkammer angeordnet sind.

**0 042 841**

FIG. 1

FIG. 3A

FIG. 3B

FIG. 2

FIG. 4

FIG. 5

FIG. 6

FIG. 7